**Europäisches Patentamt**

**European Patent Office**

**Office européen des brevets**

(19)

(11) Publication number: **0 079 235**
**B1**

(12) # EUROPEAN PATENT SPECIFICATION

(45) Date of publication of patent specification: **11.05.88**

(51) Int. Cl.⁴: **A 47 J 31/057**

(21) Application number: **82305946.4**

(22) Date of filing: **09.11.82**

(54) **Improvements in coffee-making machines.**

(30) Priority: **10.11.81 GB 8133872**

(43) Date of publication of application:
**18.05.83 Bulletin 83/20**

(45) Publication of the grant of the patent:
**11.05.88 Bulletin 88/19**

(84) Designated Contracting States:
**AT BE CH DE FR LI NL SE**

(56) References cited:
**DE-A-1 429 959**
**DE-A-1 579 502**
**DE-A-2 428 165**
**DE-A-2 714 736**
**DE-B-2 645 885**
**DE-C- 686 482**
**US-A-1 962 494**
**US-A-4 064 795**

(73) Proprietor: **Melitta-Werke Bentz & Sohn K.G.**
**Ringstrasse 99**
**D-4950 Minden (DE)**

(72) Inventor: **Colin, Stanwell-Smith**
**18 Norman Avenue**
**Twickenham Middlesex (GB)**

(74) Representative: **Nash, Keith Wilfrid et al**
**KEITH W. NASH & Co. Pearl Assurance House**
**90-92 Regent Street**
**Cambridge CB2 1DP (GB)**

## Description

This invention relates to a coffee-making machine, and in particular to a filter-type coffee-making machine which brews coffee by infusion. The term "coffee-making" is employed, even though such a machine may sometimes be employed for brewing other beverages such as tea.

In conventional filter-type coffee-making machines, the user requiring a stronger brew will usually either load the filter cup with an additional quantity of coffee or seek a different brand of ground coffee. The user requiring a more bitter coffee will probably do the same. In other words, very little if any distinction is drawn between "strong" coffee and "bitter" coffee. In theory, however, with any brand of coffee, it is possible to obtain a strong but mild brew or a weak but bitter brew. All variations between a weak, mild brew and a strong, bitter brew are also theoretically possible. This is because, when coffee is brewed by infusion, the milder tasting extracts are dissolved first, and the more bitter tasting extracts are dissolved subsequently. Consequently, reused coffee grounds will invariably produce a bitter beverage, the strength of which depends on the amount of residual extracts remaining after the first use.

Known from German specification No. 2714736 is a filtered-type coffee-making machine comprising a reservoir with a heater section, a passage through which water heated during a water heating cycle can be delivered into a filter cup, a coffee jug below the filter cup and a bypass through which a proportion of heated water may be diverted direct to the coffee jug. Moreover, the machine further comprises a diverting valve for controlling passage of heated water through the by-pass channel and a brew-time selector for causing the diverting valve to be actuated dependent on the relationship between the relative durations of the water-heating cycle and a selected brew time.

Additionally, it is known from German specification No. 1579502 to provide a filter cup with a by-pass channel. In this machine, however, the quantity of diverted water is not related to a selectable brew time.

It is an object of this invention to provide a coffee-making machine which is capable of providing a range of brews differentiating between flavour (mildness/bitterness) and strength (weak/strong).

In accordance with the present invention, there is provided a filter-type coffee-making machine comprising a reservoir with a heater section, a passage through which water heated during a water heating cycle can be delivered into a filter cup, a coffee jug below the filter cup, a diverting valve by operation of which a proportion of heated water may be diverted direct to the coffee jug, and a brew time selector for causing the diverting valve to be actuated dependent on the relationship between the relative durations of water-heating cycle and a selected brew time, thereby to select the proportion of heated water which is diverted, characterised by a by-pass channel from the filter cup, and through which the passage of water is controlled by the diverting valve and a second valve at the bottom of the filter cup to hold back a quantity of the heated water in the filter for the duration of the selected brew time, this valve being actuated to open simultaneously with actuation of the water-diverting valve.

Functionally, brew time, amount of coffee per water unit, flavour and strength are inter-dependent. A strong, mild coffee for example, requires a shorter brew time with a larger amount of coffee than weak, bitter coffee.

In one practical arrangement, the coffee-making machine provides for three flavour settings, mild—average—bitter, and three strength settings, weak—medium—strong. This gives a matrix of nine possible combinations, which demands the possibility of defining five differing amounts of coffee per water unit filled into the reservoir (a water unit will usually be a normal cup capacity plus a percentage extra to allow for retention of water in the filter). Thus, for each possible brew time, the amount of coffee must be selectable in accordance with the following matrix:

| Brew times (flavour) | Coffee amounts (strength) | | |
| --- | --- | --- | --- |
| Short | $N-2\Delta$ | $N-\Delta$ | $N$ |
| Medium | $N-\Delta$ | $N$ | $N+\Delta$ |
| Long | $N$ | $N+\Delta$ | $N+2\Delta$ |

where N is a normal amount of ground coffee and $\Delta$ is a predetermined incremental amount, subtracted or added. An automatic indicating system may be provided to inform the user how much coffee to use dependent on the strength and flavour of brew required, or such amounts could be automatically dispensed from a coffee hopper following actuation of flavour and strength selection buttons. More simply, however, a series of five differently coloured spoons of differing capacities will be sufficient, in conjunction with a map or matrix on the side of the machine with colours linked to the spoon colours. A brew time selector, e.g. three separate selection buttons or a three position slide switch, can then be visually associated with the matrix.

It will be understood, however, that the invention can be practised with any chosen greater or lesser degree of automation, and may provide for a limited or a virtually infinite number of flavour/strength combinations, the latter made possible by continuously variable selector controls for coffee amounts and/or brew times. A fully automated system will entail the introduction of sensors, indicators and control mechanisms which would otherwise be unnecessary, and at the present time it is considered preferable to practise the invention at least in a manner analogous to

that above described, wherein the user, with the aid of a calibrated water reservoir (showing the height of the water level in cups) and graduated coffee measuring means such as a set of spoons, will be able to select the required coffee strength when guided by graphics on the machine.

Appropriate selective solution of the coffee extracts is properly effected when (as in tea-making in a tea-pot) either some or all of the heated water remains in contact with the ground coffee for the selected brew time period, but substantially no longer than said selected period.

Since in practice it is not desirable for the filter cup to be capable of holding all the water from a totally filled reservoir, the filter valve can be a pressure valve, which is partially opened when the water level in the filter cup rises above a given level and closes again when the water level has fallen to said given level. Alternatively and preferably, therefore, an aperture may be provided in the filter cup at a relatively high level therein, so that when the coffee liquid reaches said level in the filter, it can flow through said aperture and thence into the by-pass channel downstream of the diverting valve. However, in either case, positive actuation of the filter valve will enable all coffee liquid held back in the filter to flow into the coffee jug, and since due to the simultaneous actuation of the diverting valve no more heated water will then enter the filter, infusion will cease independently of the water heating cycle. Thus, if the last-mentioned cycle is longer than the selected brew time, heated water will flow through the by-pass channel for the remainder of the cycle, acting to dilute the coffee liquid which has entered the jug from the filter.

It will be appreciated that the duration of the water heating cycle is dependent on the amount of water initially filled into the reservoir since, as is conventional, the cycle is not completed until the reservoir has been substantially emptied. Thus, the brew time selected for a given flavour coffee may or may not be longer than the water heating cycle, dependent on how much coffee liquid is to be brewed. However, a larger quantity of water will have required a larger amount of coffee (the exact amount according to the selected coffee strength) to be loaded into the filter. For a given flavour, the extracts from a larger amount of coffee are dissolved in the same quantity of water during a selected brew time, producing in the filter an initially more concentrated (stronger) brew than a smaller amount of coffee. Nevertheless, the selected strength at the selected flavour will result in the coffee jug, due to dilution with heated water which has by-passed the filter.

Conversely, when the brew time is longer than the water heating cycle, as will often be the case when a smaller quantity of coffee is to be made, again a more concentrated (stronger) brew will be infused in the liquid in the filter, this time due to the liquid being held back after water heating cycle has elapsed. No water will by-pass the filter, and at the end of the brew time the more concentrated coffee liquid in the filter will be released into the coffee jug to strengthen any liquid already present therein in order again to result in a coffee jug containing coffee liquid of the selected strength and flavour.

In practice, there is a minimum quantity of coffee which can be made exactly in accordance with selected requirements, and this is anticipated to be about two cups. The maximum capacity of the machine may be from ten to sixteen cups.

Psychologically, it may be regarded as disadvantageous if the user can see clear water entering the coffee jug to dilute the coffee liquid therein. Thus, according to a further preferred feature of the invention, the filter by-pass channel extends down the outside sloping wall of the filter cup and has a common exit with the exit from the interior of the filter cup into the coffee jug.

In practice, the outflow of coffee liquid from the filter cup tends to slow up as the filter cup empties. Given a shorter brew time than water heating cycle, the filter will still have at least a small outflow of coffee liquid during the entire remainder of the water heating cycle after the selected brew time has passed and the diverting valve has been actuated. The by-passed water and the residual coffee liquid outflow from the filter will mix at the common exit into the coffee jug, thus avoiding the appearance of clear water entering the coffee jug.

This effect is materially enhanced by the provision of the second valve at the bottom of the filter cup, which holds back a substantial quantity of coffee liquid which has to drain through the opened filter valve to the common exit after the selected brew time has expired. Furthermore, the above-described arrangement of by-pass channel then makes for a convenient method of actuation of the two valves. The channel per se can be in the form of a movable member which also constitutes a common operating member for the two valves, namely the diverting valve in the delivery passage to the filter from the reservoir and the filter valve at the bottom of the filter cup. At the end of the selected brew time, a timer causes actuation of a solenoid which acts to displace the channel member to cause actuation of both valves simultaneously.

Such a movable channel member, separately formed from the filter cup, is also advantageous in that it becomes exposed when, as is usual, the filter cup is removable and is so removed for cleaning, and is therefore cleanable at the same time.

The provision of the by-pass channel on the outside sloping wall of the filter cup also facilitates communication of said filter with the by-pass channel, through the afore-mentioned filter cup aperture, whereby coffee liquid in the filter cup is prevented from exceeding a predetermined, relatively high level therein, but at the same time a predetermined quantity of coffee liquid for colouring the by-passed water, after the two valves have been simultaneously actuated, is held back in the filter cup.

Further features of a filter-type coffee-making machine in accordance with the invention will be apparent from the following description of two practical examples thereof, making reference to the accompanying drawings, in which:—

Figure 1 shows a first example of coffee-making machine in front elevation;

Figure 2 shows the machine in side elevation;

Figure 3 shows the filter cup assembly of the machine, comprising filter cup and by-pass channel;

Figure 4 shows the separation of the filter cup from the by-pass channel;

Figure 5 shows a second example of coffee-making machine in front elevation; and

Figure 6 shows the machine in side elevation, with the filter cup assembly illustrated in dash-dot outline.

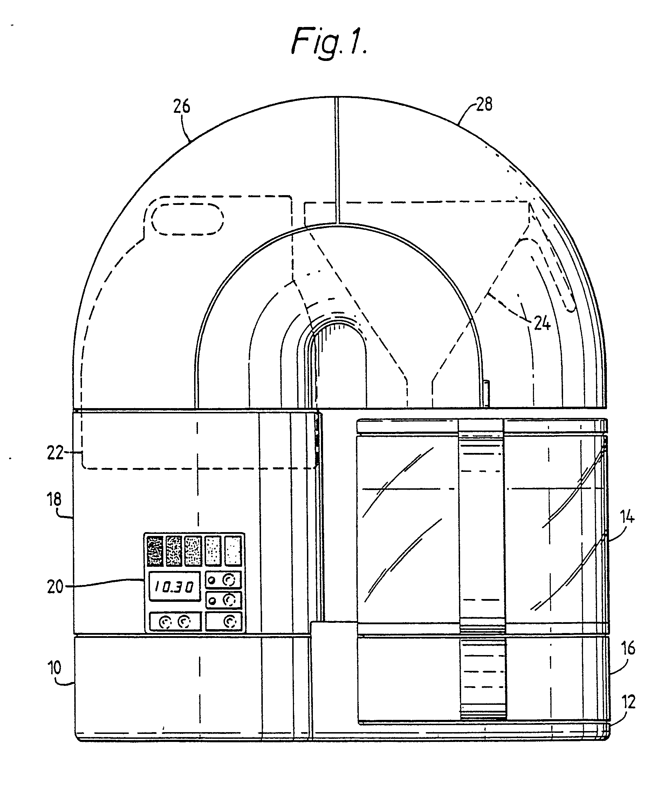

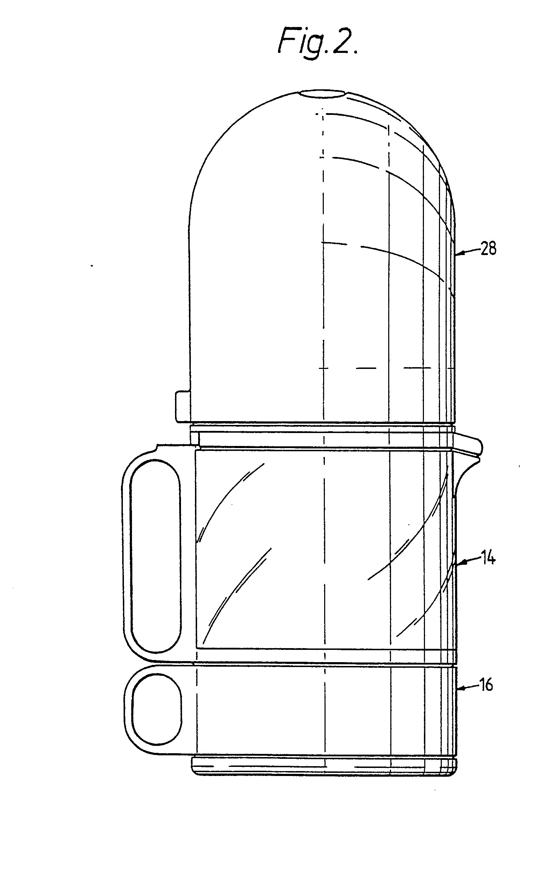

The machine shown in Figures 1 to 4 comprises a base 10 having on one side a low level hot plate 12 on which stands a coffee jug 14. The coffee jug 14 has a thick base portion 16 in which a mass of wax is contained. When the machine is in use and the jug 14 containing hot coffee liquid stands on the hot plate 12, the mass of wax becomes hot and gives off latent heat for keeping the coffee liquid hot while the jug 14 is temporarily removed to pour coffee therefrom. The wax is re-heated when the jug 14 is returned to the hot plate 12.

On the other side of the base 10, is an upstanding column 18. This contains all the electronics of the machine, and has on its front face a machine control panel 20. The column 18 also contains the heater section of a reservoir 22, the main portion of which surmounts the column. The reservoir 22 is thereby disposed to the side of a detachable filter cup 24 which surmounts the coffee jug 12. The filter cup can be detachably mounted on top of the coffee jug, but is preferably detachably mounted to the framework 10, 18 of the machine.

Conveniently, the machine is externally completed by a two-part top cover 26, 28, the parts of which are removable to allow filling of the reservoir 22 with cold water and access to the filter cup 24.

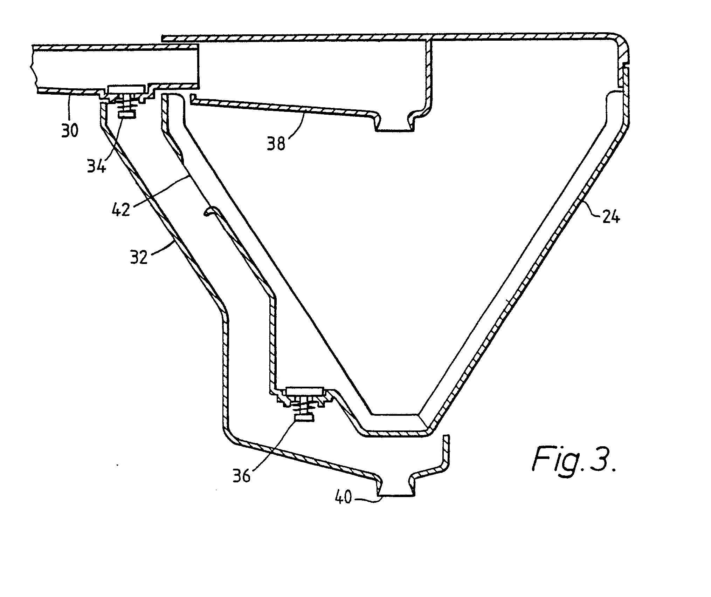

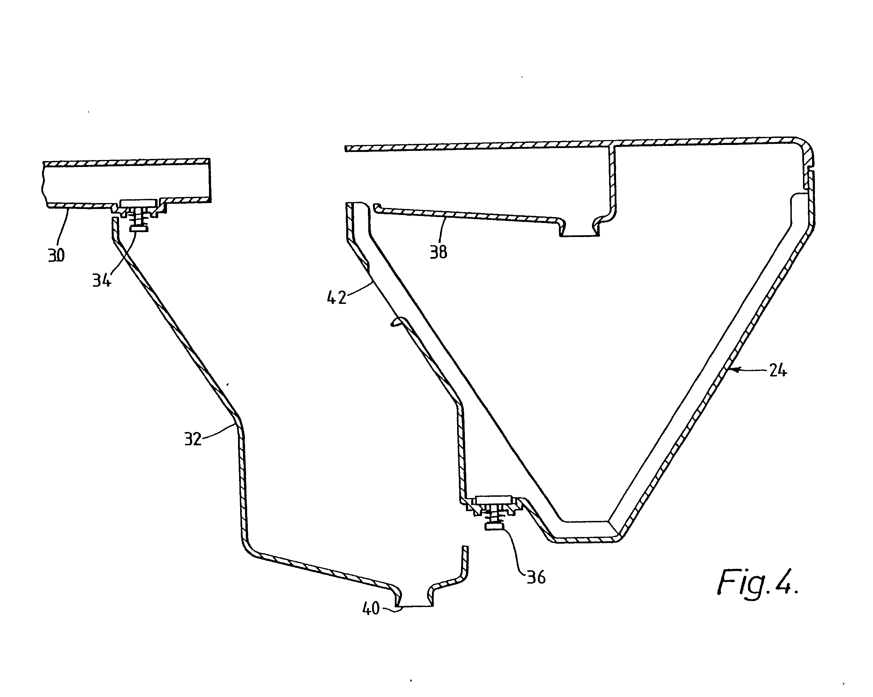

Within the top cover 26, 28, a delivery pipe for hot (near-boiling) water extends from the reservoir to a point above the filter cup 24. This delivery pipe is shown in Figures 3 and 4 and is referenced 30.

The heater section (not shown) of the reservoir preferably comprises a U-tube with one limb wider than the other. When the machine is switched on, power is supplied to an electric heater element, which heats the water in the wider limb, causing the creation of bubbles of steam which reduces the density of the water in this limb. Hot water thence rises from this limb to the delivery tube 30.

The filter cup assembly of the machine, shown in Figures 3 and 4, comprises, in addition to the filter cup 24, a by-pass channel 32. This is in the form of a displaceable channel member mounted to the framework of the machine, and is so displaceable in order simultaneously to operate a diverting valve 34 and a filter valve 36. The diverting valve 34 is mounted in the delivery pipe 30 through which hot water is supplied from the reservoir to an inlet passage 38 at the top of the filter cup 24. The filter valve 36 is located near the bottom of the filter cup 24. Both valves 34 and 36 are normally closed. When operated, the open diverting valve causes the supply of hot water to be diverted from the filter cup 24 into the by-pass channel 32, while the open filter valve admits coffee liquid retained in the filter cup into the bottom of the by-pass channel, which has an exit 40 above the coffee jug.

The amount of coffee liquid held back or retained in the filter cup 24, when the valves are closed, is determined by an aperture 42 in the wall of the filter cup, which aperture opens into the by-pass channel 32 downstream of the diverting valve 34.

The machine electronics includes a control microprocessor which, to give an example, receives the following inputs from the control panel 20:—

a) digital clock hours and minutes, fed in by two set buttons,

b) real time/alarm time, selected by one set button,

c) brew time, selected by three set buttons or a slide switch,

d) start/stop, initiated by one set button,

e) delayed or immediate operation, fed in by one set button.

Acceptance of set button inputs can be indicated by a bleeper. The microprocessor also receives temperature inputs from a sensor located near the top of the heater section of the reservoir. These temperature inputs are provided near the beginning of the water heating cycle and continuously towards the end of the cycle.

The microprocessor provides outputs to a clock display, a LED on/off indicator and a warning light for a scaled condition of the machine, these indicators also being incorporated in the control panel.

In addition, adjacent the control panel 20, the front face of the machine can bear graphics for assisting coffee flavour and strength selection. Assuming three possible strengths for any of three possible flavours are to be selectable, a set of five differently coloured, differing capacity spoons will enable any one of the nine possible selections to be made, in conjunction with the three brew time set buttons. A mild brew requires a short brew time, and a weak brew requires a relatively small amount of coffee. At the other end of the range, a bitter brew requires a long brew time, and a strong brew requires a relatively large amount of coffee.

The reservoir 22 has a transparent wall or transparent section thereof, graduated in cups of coffee liquid required. Assuming one cup to be 125 cm$^3$, typically the graduations in the reservoir will be in 140 cm$^3$ steps, primarily to allow for retention of water in the coffee grounds in the filter.

For a given number of cups required (minimum two), a corresponding number of spoonfuls of coffee will be loaded into the filter, using the spoon appropriate to the selection of strength and flavour. The machine is then set to operate, this step including selection of the correct brew time for the selected flavour.

The microprocessor also provides control outputs to a triac for switching the water heating element on and off and to a solenoid for actuating the by-pass channel member 32, which member serves as an operating member for the two valves 34 and 36. An output can also be provided to a tone generator (buzzer).

The machine can be started into operation immediately or at a set alarm time. First, a water heating cycle will be initiated by switching on the water heating element. The duration of the water heating cycle will be dependent on the amount of coffee liquid to be made, since the element is switched off when, by means of comparator circuitry fed with temperature reference signals, the temperature sensor gives a high temperature output corresponding to a "dry" condition of the reservoir.

The diverting and filter valves 34 and 36 are operated at the end of the selected brew time, which may be less than, equal to or greater than the water heating cycle.

If the heating cycle is of greater duration, then, following opening of the valves 34 and 36, for the remainder of the heating cycle hot water will be diverted through the by-pass channel 32 to mix at 40 with coffee liquid exiting from the filter cup 24 and thence enter the coffee jug 12 to dilute coffee liquid already present therein due to overflow from the filter cup 24 into the by-pass channel 32 through the filter cup aperture 42. The coffee liquid in the jug will then be of the selected strength and flavour.

If the selected brew time is of greater duration than the heating cycle, then the valves 34 and 36 will remain closed for a period after water heating has been completed, storing an amount of liquid in the filter cup 24 for further infusion (solution of further extracts). The valves 34 and 36 will open at the end of the selected brew time to release a more concentrated brew into the coffee liquid already present in the coffee jug 12 in order to impart the selected strength and flavour thereto. No water will by-pass the filter.

If the selected brew time and the water heating cycle are of equal durations, no water will by-pass the filter and no liquid will be stored for additional infusion.

At the beginning of the water heating cycle, the hot plate is switched on, and the power circuit to this hot plate remains switched on for a period, for example one hour, after coffee brewing has been completed. The hot plate is then switched off, and this action may be accompanied by an audible warning from the tone generator.

Reference has been made to a scale warning indicator. This invention relies for operation on the fact that the temperature, rate of change of temperature, or indeed rate of rate of change of temperature, at a selected point in the heater at a given time in the heating cycle, will have a value dependent on the amount of accumulated scale.

A fixed time after and near the start of the water heating cycle, the temperature outputs of the temperature sensor are fed to the comparator circuitry for comparison with one or more intermediate temperature reference levels. Too high a temperature at the sensor at this time of the water heating cycle is indicative of a scaled up condition. A partially scaled up condition can cause the scale warning indicator to flash, while an unacceptably scaled up condition may switch the warning indicator on continuously and possibly activate the tone generator. Preferably, moreover, if the machine is found to be unacceptably scaled, the valves 34 and 36 will be actuated to prevent coffee making. The temperature sensing near the beginning of the water heating cycle will also detect a "dry" condition (user omitted to fill water into reservoir), the heating cycle then being immediately terminated.

It is important to appreciate the point that the water heater is not switched off when the temperature sensor indicates an unacceptably scaled condition. De-scaling is conventionally carried out by heating water to which a descaling chemical, usually in the form of crystals, has been added. It is therefore important for de-scaling that the heater should remain operable in the presence of the scaled condition.

The temperature sensing functions for detecting scale build-up will not be performed during continuous monitoring of the sensor temperature which is commenced later in the water heating cycle.

A further feature of the machine concerns residual water left in the reservoir at the end of the water heating cycle. When the main water heater is switched off, there is commonly a substantial residue of water left in the heating section of the reservoir, especially when a generally vertical U-tube water heating arrangement is employed. This is disadvantageous, especially if, as is commonly the case, the residual water can stagnate and/or cause corrosion or the like due to the machine being left stored or standing for a considerable time before the machine is again used.

In the above-described coffee-making machine, a timer and an electronic switch controlled by said timer may be provided, whereby, at the end of the coffee brewing cycle, the water heater is switched to low power for a predetermined period, thereby to evaporate residual water in the reservoir.

The same electronic switch may be used both to control the switching on and off of said jug hot plate and to control supply of reduced heating current to the main water heater. Furthermore, if, as is sometimes the case, a timer is provided to limit the period for which the jug hot plate is powered after brewing, this same timer may be used to control the switching of the main water heater from high to low. In this instance, the invention may be practised without addition of electronic components; indeed the concept of using the same electronic switch to control the current supply both to the water heater and the jug hot plate enable the invention to be practised with less electronic components than is normal.

All the above-described operations of the machine are supervised by the clock coupled microprocessor, generally in accordance with conventional practice in the electronics art.

In the drawings, Figure 4 shows the manner in which the filter cup 24 is detachable, separating from the by-pass channel 32 to facilitate cleaning. Conveniently, the channel 32 will be a member of moulded plastics material, and the valves 34 and 36 will be of the small poppet type.

A final aspect of the machine of Figs. 1 to 4 concerns the coffee jug. Since the jug is provided internally with a heated mass of wax in an endeavour to maintain the temperature of the hot liquid when the jug is removed from its hot stand, it is desirable in conjunction therewith to minimise loss of heat through the coffee liquid inlet from the filter cup and/or the delivery spout.

In order to minimise heat losses in this respect, the liquid inlet in a lid, and possibly also the delivery spout, may incorporate U-traps (analogous to those used beneath sinks, basins and the like) which retain a small quantity of liquid serving to act as a seal. The U-trap in the spout may be fed from the U-trap in the lid inlet by means of a small inclined connecting pipe or channel formed with the lid.

In an alternative arrangement, the inlet in the coffee jug lid takes the form of a vertical delivery tube descending into the jug substantially to the bottom thereof, so that its lower end is below the liquid level once a relatively minimal amount of coffee liquid has been delivered.

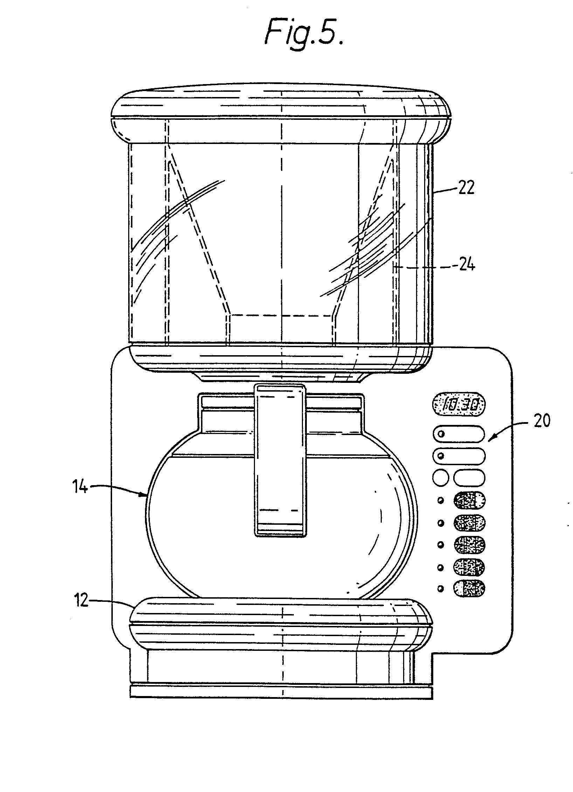

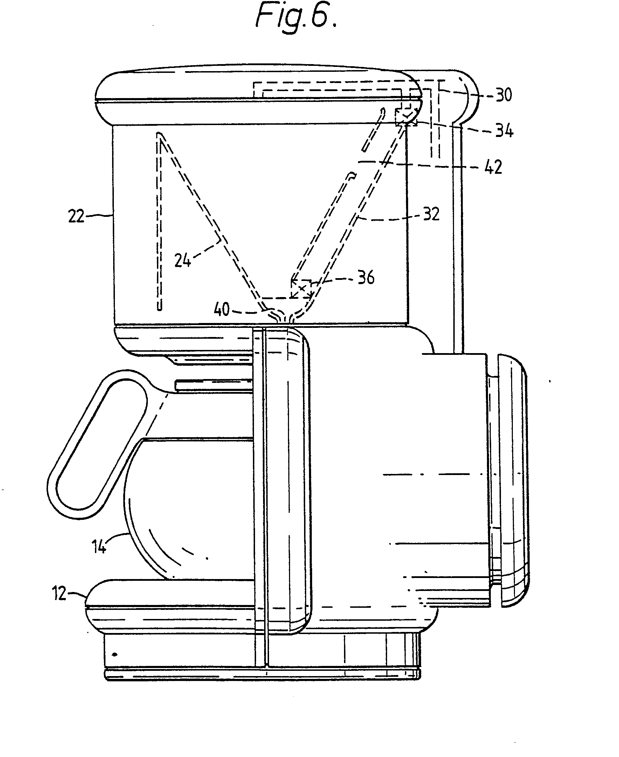

A modified machine is shown in Figures 5 and 6. This machine differs from that described with reference to Figures 1 to 4 only in design details, notably in that, in order to make it more compact, the main section of the reservoir is an annulus surrounding the filter cup, and the coffee jug is not provided with a thickened wax-containing base. The embodiment of Figures 5 and 6 will be clear from the applied references, which are the same as those used in conjunction with Figures 1 to 4.

Although the application describes the timer as being electronic it is to be understood that any switchable timing mechanism may be substituted for the electronic timer described and in particular a timing mechanism employing rotating cams and cam followers driven either by an electronic motor or a mechanical stored energy device such as a spring, may be employed, to control the different stages of the described process either in combination with a central processor unit or instead thereof.

**Claims**

1. A filter-type coffee-making machine comprising a reservoir (22) with a heater section, a passage (30) through which water heated during a water heating cycle can be delivered into a filter cup (24), a coffee jug (14) below the filter cup, a diverting valve by operation of which a proportion of heated water may be diverted direct to the coffee jug, and a brew time selector (20) for causing the diverting valve (34) to be actuated dependent on the relationship between the relative durations of the water-heating cycle and a selected brew time, thereby to select the proportion of heated water which is diverted, characterised by a by-pass channel (32) for the filter cup and through which the passage of water is controlled by the diverting valve (34) and a second valve (36) at the bottom of the filter cup to hold back a quantity of the heated water in the filter for the duration of the selected brew time, this valve being actuated to open simultaneously with actuation of the water-diverting valve.

2. A machine according to claim 1, characterised in that the second valve is a pressure valve.

3. A machine according to claim 1 or claim 2, characterised in that the filter cup has an aperture (42) therein at a predetermined level above the second valve, so that when the coffee liquid reaches said level in the filter, it can flow through said aperture and thence into the by-pass channel downstream of the diverting valve.

4. A machine according to any of claims 1 to 3, characterised in that the filter by-pass channel extends down the outside sloping wall of the filter cup and has a common exit (40) from the interior of the filter cup into the coffee jug.

5. A machine according to any of claims 1 to 4 characterised in that the filter by-pass channel is in the form of a movable member (32) which also constitutes a common operating member for the two valves, namely the diverting valve in the delivery passage to the filter from the reservoir and the filter valve at the bottom of the filter cup.

6. A machine according to claim 5, characterised by a timer controllable by the brew time selector and operable at the end of the selected brew time to cause actuation of a solenoid which acts to displace the channel member to cause actuation of both valves simultaneously.

7. A machine according to any preceding claim, characterised in that said machine bears a chart for indicating selected coffee amounts per water unit filled into the reservoir according to strength and flavour of brewed coffee required, and in that the brew time selector is positioned on the machine in visual relationship to said chart.

8. A machine according to any of claims 1 to 7, characterised by a timer and an electronic switch whereby, at the end of water heating for coffee brewing, a water heater is switched to reduced power for a predetermined period, thereby to evaporate residual water in the water reservoir, the machine also having a hot-plate (12) for supporting the coffee jug, characterised in that said timer and electronic switch are also utilised to control the switching on of the hot-plate, for the same predetermined period, at the end of water heating for coffee brewing.

9. A machine according to any of claims 1 to 8, having an electric water heater the temperature of which is monitored by a temperature sensor to control water heating for coffee brewing, characterised in that an output derived from the sensor during the water heating period is compared with at least one fixed reference level in order to detect build-up of scale, and in that the diverting valve is actuated if a reference level designating a scaled-up heater is exceeded by the sensor output.

**Patentansprüche**

1. Kaffeemaschine mit einem Filter, einem Behälter (22) mit einem Heizteil, einem Durchlaß (30), durch den das während eines Wasserheizzyklus erhitzte Wasser in einen Filterbehälter (24) fließen kann, mit einer Kaffeekanne (14) unter dem Filterbehälter, einem Ableitventil, bei dessen Betätigung ein Teil des erhitzten Wassers direkt zur Kaffeekanne abgeleitet werden kann sowie mit einem Brühzeitwähler (20), wodurch das Ableitventil (34) abhängig von dem Verhältnis zwischen den relativen Zeitdauern des Wasserheizzyklus und einer gewählten Brühzeit betätigt wird, wodurch der Anteil des erhitzten, abgeleiteten Wassers bestimmt wird, dadurch gekennzeichnet, daß ein Umgehungskanal (32) von dem Filterbehälter vorgesehen ist, durch den der Durchfluß des Wassers durch das Ableitventil (34) und ein zweites Ventil (36) am Boden des Filterbehälters gesteuert wird, um eine Menge des erhitzten Wassers im Filter für die Dauer einer ausgewählten Brühzeit zurückzuhalten, wobei dieses Ventil zum gleichzeitigen Öffnen bei Betätigung des Wasserableitventils betätigt wird.

2. Kaffeemaschine nach Anspruch 1, dadurch gekennzeichnet, daß das zweite Ventil ein Druckventil ist.

3. Kaffeemaschine nach Anspruch 1 oder 2, dadurch gekennzeichnet, daß der Filterbehälter eine Öffnung (42) in einer vorbestimmten Höhe über dem zweiten Ventil besitzt, so daß, wenn die Kaffeeflüssigkeit diese Höhe im Filter erreicht, sie durch die Öffnung fließen kann und sodann in den Umgehungskanal stromab des Ableitventils.

4. Kaffeemaschine nach einem der Ansprüche 1 bis 3, dadurch gekennzeichnet, daß sich der Filter-Umgehungskanal nach unten außerhalb der schrägen Wand des Filterbehälters erstreckt und einen gemeinsamen Auslaß vom Innern des Filterbehälters in die Kaffeekanne besitzt.

5. Kaffeemaschine nach einem der Ansprüche 1 bis 4, dadurch gekennzeichnet, daß der Filter-Umgehungskanal als bewegliches Glied (32) ausgebildet ist, das auch ein gemeinsames Betriebsteil für die zwei Ventile bildet, nämlich für das Ableitventil im Zuflußdurchlaß zum Filter vom Behälter und für das Filterventil am Boden des Filterbehälters.

6. Kaffeemaschine nach Anspruch 5, dadurch gekennzeichnet, daß ein Zeitgeber vorgesehen ist, der durch den Brühzeitwähler gesteuert wird und der am Ende der ausgewählten Brühzeit betätigt wird, um ein Solenoid zur Verstellung des Kanalteils zu betätigen, das beide Ventile gleichzeitig betätigt.

7. Kaffeemaschine nach einem der vorhergehenden Ansprüche, dadurch gekennzeichnet, daß die Maschine eine Anzeige zur Angabe der ausgewählten Kaffeemenge pro Wassereinheit, die entsprechend der benötigten Stärke und dem Geschmack in den Behälter gefüllt ist, aufweist und daß der Brühzeitwähler an der Maschine der Anzeige optisch benachbart angebracht ist.

8. Kaffeemaschine nach einem der Ansprüche 1 bis 7 dadurch gekennzeichnet, daß ein Zeitgeber und ein elektronischer Schalter vorgesehen sind, wodurch am Ende der Wasserbeheizung zum Kaffeebrühen ein Wassererhitzer für eine vorbestimmte Dauer auf eine verringerte Leistungsaufnahme geschaltet wird, wodurch das Restwasser im Wasserbehälter verdunstet und daß die Maschine mit einer Warmhalteplatte (12) zum Halten der Kaffeekanne versehen ist, dadurch gekennzeichnet, daß der Zeitgeber und der elektronische Schalter auch zur Steuerung des Einschaltens der Warmhalteplatte für die gleiche vorbestimmte Zeit am Ende des Wassererhitzens zum Kaffeebrühen benutzt werden.

9. Kaffeemaschine nach einem der Ansprüche 1 bis 8 mit einem elektrischen Wassererhitzer, dessen Temperatur von einem Temperatursensor überwacht wird, um das Wassererhitzen zum Kaffeebrühen zu steuern, dadurch gekennzeichnet, daß ein Ausgangssignal, das vom Sensor während der Dauer des Wassererhitzens erhalten wurde, mit zumindest einem bestimmten Bezugsniveau verglichen wird, um das Entstehen von Kesselstein festzustellen und daß das Umgehungsventil betätigt wird, wenn ein Bezugsniveau, das eine aufgeheizte Heizung anzeigt, vom Sensorausgang überschritten wird.

**Revendications**

1. Machine à café de type à filtre comprenant un réservoir (22) muni d'une section de chauffage, un passage (30) par lequel l'eau chauffée pendant un cycle de chauffage d'eau peut être envoyée dans une cuvette de filtre (24), un pot à café (14) placé au-dessus de la cuvette de filtre, une soupape de dérivation dont le fonctionnement permet de dériver directement vers le pot à café une certaine proportion de l'eau chauffée, et un sélecteur de temps d'infusion (20) destiné à provoquer le fonctionnement de la soupape de dérivation (34) suivant la relation existant entre les durées relatives du cycle de chauffage d'eau et d'un temps d'infusion sélectionné, pour sélectionner ainsi la proportion d'eau chaude à dériver, machine caractérisée en ce qu'elle comprend un conduit de dérivation (32) de la cuvette de filtre, le passage de l'eau dans ce conduit étant commandé par la soupape de dérivation (34), et une seconde soupape (36) placée dans le bas de la cuvette de filtre pour retenir une certaine quantité d'eau chaude dans le filtre pendant la durée du temps d'infusion sélectionné, cette soupape étant commandée pour s'ouvrir simultanément avec le fonctionnement de la soupape de dérivation d'eau.

2. Machine selon la revendication 1, caractérisée en ce que la seconde soupape est une soupape de pression.

3. Machine selon l'une quelconque des revendications 1 et 2, caractérisée en ce que la cuvette de filtre est percée d'une ouverture (42) à un niveau prédéterminé au-dessus de la seconde soupape, de façon que lorsque le café liquide atteint ce niveau dans le filtre, ce café puisse s'écouler par l'ouverture, puis ensuite dans le conduit de dérivation en aval de la soupape de dérivation.

4. Machine selon l'une quelconque des revendications 1 à 3, caractérisée en ce que le conduit de dérivation du filtre descend le long de la paroi extérieure inclinée de la cuvette de filtre et présente un orifice de sortie commun (40) entre l'intérieur de la cuvette de filtre et le pot à cafe.

5. Machine selon l'une quelconque des revendications 1 à 4, caractérisée en ce que le conduit de dérivation du filtre se présente sous la forme d'un élément mobile (32) constituant également un élément de manoeuvre commun des deux soupapes, c'est-à-dire de la soupape de dérivation du passage de dérivation allant du réservoir au filtre, et de la soupape de filtre placée dans le bas de la cuvette de filtre.

6. Machine selon la revendication 5, caractérisée en ce qu'elle comprend une minuterie commandable par le sélecteur de temps d'infusion et pouvant fonctionner à la fin du temps d'infusion sélectionné pour produire le fonctionnement d'un solénoïde servant à déplacer l'élément de conduit pour produire le fonctionnement simultané des deux soupapes.

7. Machine selon l'une quelconque des revendications précédentes, caractérisée en ce que cette machine porte un diagramme indiquant les quantités de café sélectionnées par quantité d'eau unitaire remplissant le réservoir, suivant la force et le goût de l'infusion de café voulue, et en ce que le sélecteur de temps d'infusion est placé sur la machine de manière à pouvoir être confronté visuellement à ce diagramme.

8. Machine selon l'une quelconque des revendications 1 à 7, caractérisée en ce qu'elle comprend une minuterie et un commutateur électronique permettant, à la fin du chauffage de l'eau destinée à l'infusion du café, de commuter l'appareil de chauffage d'eau sur une alimentation à puissance réduite pendant une période de temps prédéterminée de manière à évaporer ainsi l'eau résiduelle restant dans le réservoir, la machine comportant également une plaque chaude (12) destinée à supporter le pot à café, machine caractérisée également en ce que la minuterie et le commutateur électronique sont également utilisés pour commander l'allumage de la plaque chaude pendant la même période de temps prédéterminée, à la fin du chauffage de l'eau destinée à l'infusion du café.

9. Machine selon l'une quelconque des revendications 1 à 8, comprenant un appareil de chauffage d'eau électrique dont la température est surveillée par un détecteur de température pour commander le chauffage de l'eau destinée à l'infusion du café, machine caractérisée en ce qu'un signal de sortie provenant du détecteur pendant la période de chauffage de l'eau, est comparé à au moins un niveau de référence fixe pour détecter la formation de tartre, et en ce que la soupape de dérivation est actionnée si le signal de sortie du détecteur dépasse un niveau de référence indiquant l'entartrage de l'appareil de chauffage.

# Fig.1.

# Fig.2.

28

14

16

*Fig.3.*

Fig. 4.

4

# Fig.5.

# Fig.6.